# EUROPÄISCHE PATENTSCHRIFT

(11) **EP 1 469 024 B1**
(45) Veröffentlichungstag und Bekanntmachung des Hinweises auf die Patenterteilung: **16.10.2013**
(21) Anmeldenummer: 04006507.0
(22) Anmeldetag: 18.03.2004
(51) Int. Cl.: C08G 18/48, C09J 175/04

(54) **Haftklebstoff aus Polyurethan**
Polyurethane based pressure sensitive adhesive
Colle de contact à base de polyuréthane

(30) Priorität: 16.04.2003 DE 10317789
(43) Veröffentlichungstag der Anmeldung: 20.10.2004
(73) Patentinhaber: TESA SE, 20253 Hamburg (DE)
(72) Erfinder: Schümann, Uwe, Dr., 25421 Pinneberg (DE); Weiland, Kirstin, D-21035 Hamburg (DE); Lühmann, Bernd, Dr., 22844 Norderstedt (DE); Sunarto, Sianty, Singapore 270002 (SG); Hesse, Philippe, 21244 Buchholz (DE); Böhmer, Carsten, D-22523 Hamburg (DE)

(56) Entgegenhaltungen:
- EP-A- 1 285 955
- GB-A- 1 425 500

## Beschreibung

Die Erfindung betrifft einen Haftklebstoff auf Basis eines chemisch vernetzten Polyurethans, mit dem Papier, Pappe oder andere leichte Gegenstände des täglichen Gebrauchs sicher auf s ich selbst oder andere U ntergründe geklebt und rückstandsfrei wieder abgelöst werden können, weitestgehend ohne das Papier, die Pappe, die Gegenstände oder die Untergründe beim Ablösen zu schädigen oder fettig aussehende Flecken zu hinterlassen, welcher insbesondere mehrfach verwendbar, abwaschbar und lichtstabil ist, ein Reaktivbeschichtungsverfahren zu dessen lösemittel- und wasserfreier kontinuierlicher Herstellung sowie die Verwendung des Haftklebstoffs zur Herstellung von selbstklebenden Artikeln, wie z um Beispiel Klebebändern, Klebstreifen, Klebfolien oder Klebepads.

Haftklebrige beziehungsweise eigenklebrige Eigenschaften sind für Polyurethane nicht typisch. Obwohl Polyurethane in der Rangliste der Kunststoffe hinsichtlich der produzierten Mengen auf Platz fünf stehen, spielen Haftklebstoffe aus diesem Material wirtschaftlich nur eine sehr untergeordnete Rolle.

Dennoch sind Haftklebstoffe aus Polyurethan seit langem bekannt und werden in vielfältiger Weise beschrieben.

Der Effekt der Haftklebrigkeit kann durch den Zusatz von Klebrigmacher-Harzen und/oder Weichmachern zum Polyurethan-Grundpolymer erzielt werden. Diese Methode wird zum Beispiel in US 3,437,622 A (Dahl et al., Continental Tapes), US 3,718,712 A (Tushaus et al., 3M), US 4,087,392 A (Hartmann et al., BASF), DE 19 04 102 A (Hagenweiler, BASF) und JP 2000 256 639 (Toyo) beschrieben.

Derartige Haftklebstoffe haben in der Regel den Nachteil, auf vielen Haftgründen, wie zum Beispiel Papier oder Pappe bei längerer Verklebungsdauer zu stark aufzuziehen und somit nicht ohne Schädigung wieder ablösbar zu sein.
Unter dem Begriff "Aufziehen" versteht dabei der Fachmann die Erhöhung der Verklebungsfestigkeit bei Lagerung des Klebverbundes.
Weiterhin kann das Klebrigmacherharz in den Haftgrund migrieren und dort fettig aussehende Flecken hinterlassen.

Das sehr störende Phänomen, dass nach dem Wiederablösen des Haftklebstoffs von Papier, Pappe, Tapete oder ähnlichen Materialien "Fettflecken" zurückbleiben, ist vor allem auch bei denjenigen polyurethan-basierten Haftklebstoffen zu beobachten, bei denen die Haftklebrigkeit durch eine Untervernetzung, also einen Unterschuss an Isocyanatgruppen gegenüber den mit den Isocyanatgruppen reagierenden Gruppen, wie zum Beispiel Hydroxyl- oder Aminogruppen erzielt wird.
Nach dem Prinzip der Untervernetzung konzipierte Haftklebstoffe sind zum Beispiel in US 5,157,101 A (Orr, Norwood), DE 24 35 218 A (Adsley et al., Adhesive Tapes), JP 59 227 922 (Sanyo), US 3,930,102 A (Szonn et al., Beiersdorf), US 5,714,543 A (Kydonieus et al., Bristol Myers Squibb), EP 0 597 636 A1 (Kydonieus et al., Squibb) und US 5,591,820 A (Kydonieus et al., Squibb) beschrieben.

In eine sehr ähnliche Kategorie mit analogen Schwächen fallen Polyurethan-Haftklebstoffe, die Monoole enthalten. Derartige Polyurethane sind ebenfalls untervernetzt und enthalten somit höhere Anteile an migrierfähigen Polyurethan-Einheiten mit geringem Molekulargewicht.
Polyurethan-Haftklebstoffe auf dieser Basis sind zum Beispiel aus EP 0 882 749 A1 (Ikeda et al., Nitto), US 5,227,409 A (Mobley et al., Dow) und US 5,102,714 A (Mobley et al., Dow) bekannt.

In einem weiteren Typus von Haftklebstoffen aus Polyurethan werden Hydroxylgruppen tragende doppelbindungshaltige Polyolkomponenten eingesetzt. Polyurethan-Haftklebstoffe auf dieser Basis sind zum Beispiel in JP 02 003 476 (Tsubota et al., Shinko), WO 98/30648 A1 (Gerard et al., Shell), JP 59 230 076 (Sekisui), JP 2001 146 577 (Toyo), US 3,879,248 A (Kest), US 3,743,616 A (Kest), US 3,743,617 A (Kest), US 5,486,570 A (St. Clair, Shell) und US 3,515,773 A (Dahl et al., Continental Tapes) aufgeführt. Nachteilig ist die oxidative Empfindlichkeit dieser Haftklebstoffe, hervorgerufen durch die Doppelbindungen in der Polymerhauptkette. Dies führt nach einiger Zeit zu einer Verlackung oder zu einem Abstumpfen der haftklebrigen Oberfläche. Weiterhin enthalten die meisten Haftklebstoffe dieses Typus noch zusätzlich Harze, was die bereits weiter oben beschriebenen Nachteile zur Folge hat.

Ein spezieller Kohlenstoff-Kohlenstoff-Doppelbindungen enthaltender Polyurethan-Haftklebstoff, basierend auf dem Naturprodukt Rizinusöl, wird in US 3,246,049 A (Webber, Norton) beschrieben. Auch hier ist als Schwäche die oxidativen Empfindlichkeit anzusehen.

In EP 0 979 835 A (Questel et al., Elf Atochem) werden Hydroxyl-terminierte Polyalkylene als Polyol-Komponente vorgeschlagen, womit das Problem der oxidativen Empfindlichkeit gelöst wäre. Die Zusammensetzungen sind allerdings feuchtigkeitshärtend, erreichen somit eine hohe kohäsive Endfestigkeit und sind nicht mehrfach verwendbar, so dass sie für reversible Papierverklebungen ungeeignet sind. Zudem enthalten sie Klebrigmacherharze und Weichmacher, deren Nachteile bereits weiter oben beschrieben wurden.

Feuchtigkeitshärtende P olyurethan-Haftklebstoffe w erden a ußerdem z um B eispiel auch noch in US 4,661,542 A (USM), JP 63 189 486 (Sanyo) und EP 0 196 749 A1 (von Voithenberg et al., Emhart) beschrieben.

Ein Polyurethan-Haftklebstoff auf Basis von hydrierten Polybutadienen wird in JP 01 156 386 (Uehara et al., Hitachi) beschrieben. Nachteilig ist hier die Notwendigkeit einer Elektronenstrahlvernetzung, die einen erheblichen technischen Aufwand bedeutet.

Ein Polyurethan-Haftklebstoff, der ebenfalls durch Elektronenstrahlen gehärtet werden muss, ist aus JP 63 260 977 (Uehara et al., Hitachi) bekannt. Dort werden Polyether als Polyol-Komponente eingesetzt.

In einigen Schriften werden Polyurethan enthaltende Blends oder Polyurethan-Copolymerisate mit haftklebrigen Eigenschaften beschrieben. Beispiele sind US 5,910,536 A (Kydonieus et al., Bristol Myers Squibb), US 5,714,543 A (Shah et al., Bristol Myers Squibb) und US 4,626,475 A (Barnett et al., Ashland Oil). Diese Haftklebstoffe zeichnen sich in der Regel durch einen erhöhten Tack aus und sind daher von Papier und anderen empfindlichen Substraten nur schwer ohne Schädigung zu entfernen.

Polyurethan-Haftklebstoffe mit speziellen Zusatzeigenschaften, wie zum Beispiel Flammfestigkeit oder elektrische Leitfähigkeit, werden beispielsweise in EP 1 108 768 A1 (Wong, Tyco) oder US 4,855,077 A (Hata et al., Takiron) beschrieben.

Geschäumte Polyurethane mit haftklebrigen Eigenschaften sind ebenfalls bekannt. Beispielhaft sei die Schrift DE 24 35 217 A (Adsley et al., Adhesive Tapes) genannt, sowie die Beschreibungen hydrophiler Schäume in DE 42 33 289 A (Kenndoff et al., Beiersdorf) und WO 94/07935 A (Kenndoff et al., Beiersdorf).
Grundsätzlich haben geschäumte Polyurethane durch die Vergrößerung der Oberfläche den Nachteil einer erhöhten oxidativen Empfindlichkeit sowie einer erhöhten Lichtempfindlichkeit. In der Praxis hat sich gezeigt, dass sie auf Papier und Pappe bei längerer Verklebungsdauer stark aufziehen und entweder nur unter Schädigung des Papiers oder der Pappe abziehbar sind oder aber, insbesondere im Falle der durch Superabsorber-Zusätze hydrophil eingestellten Schäume, mit dem Papier oder der Pappe in einer Weise in Wechselwirkung treten, dass es zur Fleckenbildung kommt.

Polyurethane m it h aftklebrigen Eigenschaften können, w ie in J P 2 000 0 73 0 40 (Toyo) und JP 2000 256 638 (Toyo) aufgezeigt wird, auch durch Verwendung von sowohl Polyethern als auch Polyestern sowie zweier unterschiedlicher Katalysatoren innerhalb einer P olyolkomponenten-Rezeptur erhalten werden. N achteilig d aran i st vor allem d ie durch die Rezepturen bedingte Erhöhung an Komplexität in der Herstellung.

In JP 2000 328 034 (Toyo), US 3,761,307 A (Dahl) und US 3,925,283 A (Dahl, Continental Tapes) werden haftklebrige Polyurethan/-harnstoffe b eschrieben, d ie d urch Einbau zusätzlicher aminischer Kettenverlängerer beziehungsweise Vernetzer in das Polymer erhalten werden. Als nachteilig werden die Komplexität in der Herstellung empfunden sowie das vermutete zu starke Aufziehverhalten auf Papier.

In DE 21 39 640 A (Dollhausen et al., Bayer) wird ein Haftklebstoff auf Basis eines aromatischen Diisocyanatourethans beschrieben. Nachteilig ist vor allem die für aromatische Polyurethane typische Vergilbungsneigung.

Zur Erzielung haftklebriger Eigenschaften werden in DE 100 30 908 A1 (Bolte et al., Henkel) und in EP 0 081 103 A1 (Miyake et al., Takeda) die Verwendung zweier unterschiedlicher Isocyanate innerhalb einer Polyurethan-Zusammensetzung vorgeschlagen. Auch in diesen Fällen wird die Komplexität in der Herstellung als nachteilig empfunden.

In WO 97/22642 A1 (Chang et al., Bristol Myers Squibb) wird vorgeschlagen, zur Herstellung eines Haftklebstoffs ein NCO-terminiertes Prepolymer und eine Polyhydroxyverbindung so lange bei einer bestimmten Temperatur zusammen zu erhitzen, bis ein Gelanteil von 30 bis 40 % erhalten wird. Nachteilig an dieser Methode ist die Durchfettungsneigung bei Verwendung des Haftklebstoffs zum Verkleben von Papier, die sich aus dem relativ niedrigen Gelgehalt ergibt.

Aus US 3,796,678 A (Bartizal, 3M) ist ein Polyurethan-Haftklebstoff auf Basis verkappter Isocyanat-Prepolymere bekannt, der in der Herstellung auf Wasser oder organische Lösemittel angewiesen ist. Als nachteilig werden die komplexe Art der Herstellung angesehen sowie die Notwendigkeit, Wasser oder Lösemittel einsetzen zu müssen.

Ein Polyurethan-Latex-Haftklebstoff wird in WO 98/31760 A1 (Schrock et al., Dow Chemical) beschrieben. Nachteilig ist die Notwendigkeit einer Trocknung, wodurch es entweder unmöglich oder zumindest sehr zeitaufwendig ist, blasenfreie Haftklebstofffilme größerer Dicke zu erzielen.

In einigen Schriften wird ein Polyurethan-Haftklebstoff über die Vernetzungsdichte definiert. In GB 1,113,925 A (Weller) und GB 1,216,672 A (Grindley) werden Kettenlängen zwischen den Vernetzungspunkten von 130 bis 285 Kettenatomen beziehungsweise mehr als 285 Kettenatomen vorgeschlagen. In der Praxis hat sich gezeigt, dass eine Steuerung der Haftklebeeigenschaften über das Kriterium Kettenlänge allein nicht möglich ist. Eine zu geringe Vernetzungsdichte hat das bekannte Durchfettungsproblem bei Papierverklebungen zur Folge, eine zu hohe Vernetzungsdichte führt zu Haftklebstoffen mit unzureichender Eigenklebrigkeit.

In EP 1 088 871 A1 (Heguri et al., Sekisui) wird für das verwendete Polyisocyanat eine bestimmte Distanz zwischen den Isocyanatgruppen beziehungsweise ein bestimmter Vernetzungsgrad vorgeschrieben. Das Molekulargewicht zwischen zwei Isocyanatgruppen innerhalb des Polyisocyanats soll 220 bis 570 betragen. Auch diese Art der Steuerung der Vemetzungsdichte über die Kettenlänge innerhalb des Polyisocyanats dürfte das bekannte Problem, dass entweder die Klebkraft insbesondere für Papierverklebungen unzureichend ist, oder aber eine Tendenz zur Ausbildung von Fettflecken festzustellen ist, nicht reduzieren.

Auch in US 6,040,028 A (Cline et al., Bayer) wird ein Polyurethan-Klebstoff (Kontaktklebstoff) über das Molekulargewicht zwischen Vernetzungspunkten definiert. Vorgeschrieben wird ein Molekulargewicht zwischen 7000 und 16000. Weitere Einschränkungen werden unter anderem dahingehend gemacht, dass 0 bis 10 % der Polyole ein Molekulargewicht von 60 bis 400 haben müssen und 90 bis 100 % der Polyole ein Molekulargewicht von 1800 bis 12000.

Auch hier muss die für haftklebrige Polyurethane typische Durchfettungsneigung angenommen werden, da die Vernetzungsdichte relativ gering ist und keine Hinweise auf eine mögliche Lösung des Problems gegeben werden.

In WO 01/62818 A1 (Hansen et al., 3M) wird vorgeschlagen, zur Herstellung eines Polyurethan-Haftklebstoffs zwei Polyole oder anderweitige mit NCO-Gruppen reagierende Materialien mit Isocyanaten umzusetzen, wobei sich die mit den Isocyanaten reagierenden Komponenten dahingehend voneinander unterscheiden, dass eine ein Molekulargewicht größer 2000 und eine ein Molekulargewicht kleiner 2000 hat.

Derartige Haftklebstoffe sind unter anderem aus den Beispielen in US 5,227,409 A und US 3,437,622 A bekannt, auch hinsichtlich der Einschränkung (gemäß Unteranspruch 5), dass es sich bei den mit den Isocyanaten reagierenden Komponenten fast ausschließlich um Diole handelt. Ferner sind derart zusammengesetzte Polyurethane auch bereits in den Beispielen in EP 1 095 993 A1 und EP 1 101 803 A1 vorbeschrieben, wobei es sich in den letztgenannten Beispielen nicht um Zusammensetzungen zur Erzielung von Haftklebstoffen handelt. Das vorgeschlagene Reaktionsprodukt in WO 01/62818 A1 ist somit nicht eindeutig ein Haftklebstoff. Hinweise zur Lösung des Durchfettungsproblems werden nicht gegeben.

Ein Polyurethan-basierter Haftklebstoff ist darüber hinaus auch in EP 1 285 955 A1 offenbart.

Aufgabe der Erfindung ist es, einen Haftklebstoff zur Verfügung zu stellen, mit dem Papier, Pappe oder andere leichte Gegenstände des täglichen Gebrauchs sicher auf sich selbst oder andere Untergründe geklebt und rückstandsfrei wieder abgelöst werden können, ohne dass das Papier, die Pappe, die Gegenstände oder die Untergründe beim Ablösen geschädigt werden, der mehrfach verwendbar, abwaschbar und lichtstabil ist und der die geschilderten Nachteile des Standes der Technik nicht oder nicht in dem Maße zeigt. Insbesondere soll der Haftklebstoff nach dem Entfernen keine fettig aussehenden Flecken auf dem Papier, der Pappe, den Gegenständen oder dem Untergrund hinterlassen.

Gelöst wird diese Aufgabe durch einen Haftklebstoff auf Basis von Polyurethan, wie er im Hauptanspruch niedergelegt ist. Gegenstand der Unteransprüche sind dabei vorteilhafte Weiterbildungen des Haftklebstoffs, Verfahren zur Herstellung desselben sowie Verwendungsmöglichkeiten.

Demgemäss betrifft die Erfindung einen Haftklebstoff auf Basis von Polyurethan, der dadurch gekennzeichnet ist, dass sich das Polyurethan aus folgenden miteinander zur Reaktion gebrachten Ausgangsstoffen in den angegeben Verhältnissen zusammensetzt:
a) mindestens einem aliphatischen oder alicyclischen Diisocyanat mit jeweils unsymmetrischer Molekülstruktur,
b) einer Kombination aus mindestens einem Polypropylenglykol-Diol und mindestens einem Polypropylenglykol-Triol,
   wobei das Verhältnis der Anzahl der Hydroxylgruppen der Diol-Komponente zu der Anzahl der Hydroxylgruppen der Triol-Komponente zwischen 1,5 und 9,0, bevorzugt zwischen 1,5 und 2,5 liegt,
   wobei weiterhin das Verhältnis der Anzahl der Isocyanat-Gruppen zur Gesamtanzahl der Hydroxylgruppen zwischen 0,9 und 1,1, bevorzugt zwischen 0,95 und 1,05 liegt, und wobei die Diole und Triole alternativ jeweils wie folgt ausgewählt und kombiniert werden:
   - Diole mit einem Molekulargewicht von kleiner oder gleich 1000 werden mit Triolen kombiniert, deren Molekulargewicht größer 1000, bevorzugt größer oder gleich 3000 ist,
   - Diole mit einem Molekulargewicht von größer 1000 werden mit Triolen kombiniert, deren Molekulargewicht kleiner 1000 ist.

Um Polyurethane mit ausreichender Lichtstabilität zu erzeugen, müssen bekanntermaßen aliphatische oder alicyclische Isocyanate beziehungsweise Isocyanate mit nicht aromatisch gebundenen Isocyanatgruppen verwendet werden. Überraschend wurde gefunden, dass aliphatische oder alicyclische Diisocyanate mit jeweils unsymmetrischer Molekülstruktur, in denen also die beiden Isocyanatgruppen jeweils eine unterschiedliche Reaktivität besitzen, geeignet sind, um Polyurethane mit dem gewünschten Eigenschaftsprofil entsprechend der Aufgabe der Erfindung zu erzeugen. Insbesondere die sonst für haftklebrige Polyurethane typische Neigung, auf Papier oder Pappe fettig aussehende Flecken zu hinterlassen, wird durch den Einsatz von Diisocyanaten mit unsymmetrischer Molekülstruktur deutlich reduziert. Unsymmetrische Molekülstruktur bedeutet, dass das Molekül keine Symmetrieelemente (zum Beispiel Spiegelebenen, Symmetrieachsen, Symmetriezentren) besitzt, dass also keine Symmetrieoperation ausgeführt werden kann, die ein mit dem Ausgangsmolekül deckungsgleiches Molekül erzeugt.

Beispiele geeigneter erfindungsgemäßer Diisocyanate sind 1-Isocyanatomethyl-3-isocyanato-1,5,5-trimethylcyclohexan (isophorondiisocyanat), 1-Methyl-2,4-diisocyanatocyclohexan, 1,6-Diisocyanato-2,2,4-trimethylhexan, 1,6-Diisocyanato-2,4,4-trimethylhexan, 5-Isocyanato-1 -(2-isocyanatoeth-1 -yl)-1,3,3-trimethyl-cyclohexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, Dicyclohexylmethan-2,4'diisocyanat, 2-Heptyl-3,4-bis(9-isocyanatononyl)-1-pentyl-cyclohexan, Ethylethylendiisocyanat, 2,2,4-Trimethyl-hexamethylendiisocyanat oder chlorierte, bromierte, schwefel- oder phosphorhaltige Diisocyanate mit unsymmetrischer Molekülstruktur.

In einer bevorzugten Ausführungsform wird Isophorondiisocyanat verwendet.

Hinsichtlich der stofflichen und mengenmäßigen Zusammensetzung der mit dem Diisocyanat zur Reaktion gebrachten Edukte wurde überraschend gefunden, dass Kombinationen aus mindestens einem Polypropylenglykol-Diol mit mindestens einem Polypropylenglykol-Triol geeignet sind, um Polyurethane mit dem gewünschten Eigenschaftsprofil entsprechend der Aufgabe der Erfindung zu erzeugen, wenn das Verhältnis der Anzahl der Hydroxylgruppen des Diols zu der Anzahl der Hydroxylgruppen des Triols zwischen 1,5 und 9,0, bevorzugt zwischen 1,5 und 2,5 liegt, wenn weiterhin das Verhältnis der Anzahl der Isocyanat-Gruppen zur Gesamtanzahl der Hydroxylgruppen zwischen 0,9 und 1,1, bevorzugt zwischen 0,95 und 1,05 liegt, wenn also weder ein signifikanter Isocyanat-Überschuss noch ein signifikanter Isocyanat-Unterschuss vorliegt und wenn die Diole und Triole alternativ jeweils wie folgt ausgewählt und kombiniert werden:
- Diole mit einem Molekulargewicht von kleiner oder gleich 1000 werden m it Triolen kombiniert, deren Molekulargewicht größer 1000, bevorzugt größer oder gleich 3000 ist,
- Diole mit einem Molekulargewicht von größer 1000 werden mit Triolen kombiniert, deren Molekulargewicht kleiner 1000 ist.

Als Polypropylenglykole können alle handelsüblichen Polyether auf Basis von Propylenoxid und eines difunktionellen Starters im Falle der Diole und eines trifunktionellen Starters im Falle der Triole eingesetzt werden. Darunter fallen sowohl die konventionell, das heißt im Regelfall mit einem basischen Katalysator, wie zum Beispiel Kaliumhydroxid, hergestellten Polypropylenglykole, als auch die besonders reinen Polypropylenglykole, die DMC (Double metal cyanide)-katalysiert hergestellt werden, und deren Herstellung zum Beispiel in US 5,712,216 A, US 5,693,584 A, WO 99/56874 A1, WO 99/51661 A1, WO 99/59719 A1, WO 99/64152 A1, US 5,952,261 A, WO 99/64493 A1 und WO 99/51657 A1 beschrieben wird.

Charakteristisch an den DMC-katalysierten Polypropylenglykolen ist, dass die "nominale" beziehungsweise theoretische Funktionalität von exakt 2 im Falle der Diole beziehungsweise exakt 3 im Falle der Triole auch tatsächlich annähernd erreicht wird. Bei den konventionell hergestellten Polypropylenglykolen ist die "wahre" Funktionalität stets etwas geringer als die theoretische, und zwar insbesondere bei Polypropylenglykolen mit höherem Molekulargewicht. Ursache ist eine Umlagerungs-Nebenreaktion des Propylenoxids zum Allylalkohol.

Weiterhin können auch alle Polypropylenglykol-Diole beziehungsweise -Triole eingesetzt werden, in denen Ethylenoxid mit einpolymerisiert ist, was in vielen handelsüblichen Polypropylenglykolen der Fall ist, um eine erhöhte Reaktivität gegenüber Isocyanaten zu erzielen.

Durch Variation des Verhältnisses der Anzahl der Hydroxylgruppen des Diols zu der des Triols innerhalb der gesetzten Grenzen kann die Klebkraft anwendungsgerecht eingestellt werden. Überraschend wurde gefunden, dass die Klebkraft zunimmt, je höher das Verhältnis der Anzahl der Diol-OH-Gruppen zu der der Triol-OH-Gruppen ist.

Der Klebkraftbereich, der innerhalb der angegeben Grenzen eingestellt werden kann, liegt ungefähr zwischen 1,0 und 7,0 N/cm, innerhalb der bevorzugten Grenzen zwischen ca. 1,5 und 4,0 N/cm.

Die Klebkraft ist jeweils über das Verhältnis der Anzahl der Hydroxylgruppen des Diols zu der Anzahl der Hydroxylgruppen des Triols steuer- beziehungsweise einstellbar.

In einer möglichen Ausführungsform enthält der polyurethan-basierte Haftklebstoff weitere Rezeptierungsbestandteile wie zum Beispiel Katalysatoren, Alterungsschutzmittel (Antioxidantien), Lichtschutzmittel, UV-Absorber, rheologische Additive sowie sonstige Hilfs- und Zusatzstoffe.

Bei der Auswahl dieser Stoffe ist darauf zu achten, dass diese Stoffe keine Migrationstendenz zum zu verklebenden Substrat hin haben, damit es nicht auf diese Weise zur Fleckenbildung kommt. Aus dem gleichen Grund ist die Konzentration dieser Stoffe, insbesondere der flüssigen, in der Gesamtzusammensetzung möglichst niedrig zu halten. Die zusätzliche Verwendung von Weichmachern oder Klebrigmacherharzen sollte vermieden werden.

Um die Reaktion zwischen der Isocyanat-Komponente und der mit dem Isocyanat reagierenden Komponente zu beschleunigen, können alle dem Fachmann bekannten Katalysatoren, wie zum Beispiel tertiäre Amine oder zinnorganische Verbindungen eingesetzt werden.

Die Verwendung von Antioxidantien ist vorteilhaft, aber nicht zwingend notwendig.

Zu den geeigneten Antioxidantien zählen zum Beispiel sterisch gehinderte Phenole, Hydrochinon-Derivate, Amine, organische Schwefelverbindungen oder organische Phosphorverbindungen.

Lichtschutzmittel und UV-Absorber können optional ebenso eingesetzt werden.

Als Lichtschutzmittel finden d ie b ei G aechter u nd Müller, T aschenbuch d er K unststoff-Additive, München 1979, bei Kirk-Othmer (3.) 23, 615 bis 627, bei Encycl. Polym. Sci. Technol. 14, 125 bis 148 und bei Ullmann (4.) 8, 21; 15, 529, 676 offenbarten Verwendung.

Beispiele für rheologische Additive sind pyrogene Kieselsäuren, Schichtsilikate (Bentonite), hochmolekulare Polyamidpulver oder Rizinusölderivat-Pulver.

Der Haftklebstoff wird in einer bevorzugten Ausführungsform nach dem im folgenden beschriebenen Verfahren kontinuierlich hergestellt:

Es werden in einem Behälter A im wesentlichen die vorgemischte Polypropylenglykol-Kombination (Polyol-Komponente) und in einem Behälter B im wesentlichen die Isocyanat-Komponente vorgelegt, wobei gegebenenfalls die weiteren Rezeptierungsbestandteile diesen Komponenten bereits zuvor in einem üblichen Mischverfahren zugemischt wurden.
Die Polyol- und die Isocyanat-Komponente werden über Präzisionspumpen durch den Mischkopf oder das Mischrohr einer Mehrkomponenten-Misch- und Dosieranlage gefördert, dort homogen vermischt und somit zur Reaktion gebracht. Die somit gemischten, miteinander chemisch reagierenden Komponenten werden unmittelbar danach auf ein bahnförmiges Trägermaterial aufgebracht, das sich bevorzugt mit konstanter Geschwindigkeit bewegt. Die Art des Trägermaterials richtet sich nach dem herzustellenden Artikel. Das mit der reagierenden Polyurethanmasse beschichtete Trägermaterial wird durch einen Wärmekanal geführt, in dem die Polyurethanmasse zum Haftklebstoff aushärtet. Das Auftragsgewicht der Polyurethanmasse ist frei wählbar. Es richtet sich nach dem herzustellenden Artikel. Das beschichtete Trägermaterial wird abschließend in einer Wickelstation aufgewickelt.

Das beschriebene Verfahren ermöglicht es, lösemittel- und wasserfrei zu arbeiten. Das lösemittel- und wasserfreie Arbeiten ist die bevorzugte Verfahrensweise, ist aber nicht zwingend notwendig. Um zum Beispiel besonders geringe Auftragsgewichte zu erzielen, können die Komponenten in geeigneter Weise verdünnt werden.

Um die Verankerung der Polyurethanmasse auf den bahnförmigen Trägermaterialien zu verbessern, können alle bekannten Methoden der Oberflächenvorbehandlung, wie beispielsweise Corona-Vorbehandlung, Beflammung, Gasphasenbehandlung (zum Beispiel Fluorierung) eingesetzt werden. Ebenso können alle bekannten Methoden der Primerung eingesetzt werden, wobei die Primerschicht sowohl aus Lösungen oder Dispersionen heraus auf das Trägermaterial aufgetragen werden kann als auch im Extrusions- oder Coextrusionsverfahren.

Um die Abrolleigenschaften der gewickelten Rolle zu verbessern, kann die Rückseite des bahnförmigen Materials mit einem Trennlack (Releaselack) vorbeschichtet werden oder aber eine trennende co- oder aufextrudierte Rückseitenbeschichtung tragen.

Ein Haftklebstoff auf Basis von Polyurethan gemäß obiger Beschreibung, dadurch gekennzeichnet, dass sich das Polyurethan aus folgenden miteinander zur Reaktion gebrachten Ausgangsstoffen in den angegeben Verhältnissen zusammensetzt:
a) mindestens einem aliphatischen oder alicyclischen Diisocyanat mit jeweils unsymmetrischer Molekülstruktur,
b) einer Kombination aus mindestens einem Polypropylenglykol-Diol und mindestens einem Polypropylenglykol-Triol,
   wobei das Verhältnis der Anzahl der Hydroxylgruppen der Diol-Komponente zu der Anzahl der Hydroxylgruppen der Triol-Komponente zwischen 1,5 und 9,0, bevorzugt zwischen 1,5 und 2,5 liegt,
   wobei weiterhin das Verhältnis der Anzahl der Isocyanat-Gruppen zur Gesamtanzahl der Hydroxylgruppen zwischen 0,9 und 1,1, bevorzugt zwischen 0,95 und 1,05 liegt
   und wobei die Diole und Triole alternativ jeweils wie folgt ausgewählt und kombiniert werden:
   - Diole mit einem Molekulargewicht von kleiner oder gleich 1000 werden mit Triolen kombiniert, deren Molekulargewicht größer 1000, bevorzugt größer oder gleich 3000 ist,
   - Diole mit einem Molekulargewicht von größer 1000 werden mit Triolen kombiniert, deren Molekulargewicht kleiner 1000 ist,
zeigt hervorragende Produkteigenschaften, die auch für den Fachmann derartig nicht vorherzusehen waren.

Der Haftklebstoff ist geeignet, um beispielsweise Notizzettel, Papierblätter, Kalenderblätter, Streifen, Karten oder Schachteln aus Pappe, Kartonmaterial oder Kunststoff, andere kleine Gebrauchsgegenstände aus Kunststoff, Holz, Glas, Stein oder Metall sicher auf vielen Untergründen oder auf sich selbst zu befestigen.

Der Haftklebstoff gemäß obiger Beschreibung kann jederzeit, auch nach Wochen oder Monaten, wieder von den Gegenständen, Materialien oder Untergründen, auf die er geklebt wurde, problemlos abgelöst werden, ohne dass diese Gegenstände, Materialien oder Untergründe geschädigt werden. Insbesondere hinterlässt der Haftklebstoff nach dem Ablösen keine Rückstände oder fettig aussehende Flecken auf den verklebten Gegenständen, Materialien oder Untergründen, auch nicht auf stark saugfähigem Papier.

Der Haftklebstoff gemäß obiger Beschreibung ist mehrfach verwendbar, ohne dass es zu Einbußen in der Klebkraft kommt. Wird der Haftklebstoff unverklebt und ohne Schutzabdeckung längere Zeit in einer normalen Umgebung aufbewahrt, so staubt er naturgemäß ein, so dass sich seine Klebkraft dadurch reduziert. Eine solche Staubschicht i st mit n ormalem L eitungswasser j ederzeit I eicht w ieder e ntfernbar. N ach dem Trocknen ist die ursprüngliche Klebkraft sofort wieder in vollem Umfang hergestellt. Selbst große Mengen an Staub, Sand oder Pulvern aller Korngrößen lassen sich durch Abwaschen leicht wieder entfernen.

Dadurch, dass der Haftklebstoff lichtstabil ist, kann er auch zur Verklebung auf licht- und sonnenexponierten Gegenständen, Materialien oder Untergründen eingesetzt werden, zum Beispiel auf oder hinter Fensterscheiben oder Autoscheiben. Generell ist der Haftklebstoff für Innen- wie für Außenanwendungen gleichermaßen geeignet.

Im folgenden soll die Erfindung anhand von Beispielen erläutert werden, ohne diese damit allerdings einschränken zu wollen.

Die folgenden Prüfmethoden wurden eingesetzt, um die nach den beschriebenen Verfahren hergestellten Muster kurz zu charakterisieren.
- Die Prüfmuster wurden jeweils hergestellt, indem die zunächst flüssige, reaktive Polyurethan-Haftklebstoffmasse mit einem Auftragsgewicht von 50 g/m² auf eine 26 µm dicke Polyesterfolie beschichtet und bei 100 °C ausgehärtet wurde. Die Messungen erfolgten nach einer "Reifezeit" (bei Raumtemperatur) von einer Woche.
- Die Klebkraft wurde nach PSTC-101 bestimmt. Nach dieser Methode wird der Verbund aus Haftklebstoffschicht und Polyesterfolie auf den Haftgrund (Stahl) aufgebracht und anschließend unter definierten Bedingungen mittels einer Zugprüfmaschine abgezogen. Der Abzugswinkel beträgt jeweils 180°, die Abzugsgeschwindigkeit 300 mm/min. Die zum Abziehen erforderliche Kraft ist die Klebkraft, welche in der Einheit N/cm angegeben wird.
- Der Schertest erfolgte nach der Prüfvorschrift PSTC-107. Nach dieser Methode wird der Verbund aus Haftklebstoffschicht und Polyesterfolie auf den Haftgrund (Stahl) aufgebracht und anschließend einer konstanten Scherbelastung ausgesetzt. Ermittelt wird die Haltedauer in Minuten.
   Die Verklebungsfläche betrug jeweils 13 x 20 mm. Die Scherbelastung dieser Verklebungsfläche betrug jeweils 1 Kg.
- Die Tackmessung (Messung der Oberflächenklebrigkeit) erfolgt nach der Rolling Ball Methode gemäß der Prüfvorschrift PSTC-6.
   Die Messvorrichtung besteht demgemäss im wesentlichen aus einer schiefen Ebene, einer Stahlkugel und einem definierten Edelstahluntergrund. Die Stahlkugel von 5,6 g (11 mm Durchmesser) rollt unter einem Neigungswinkel von 21,5° die schiefe Ebene (Höhe 65 mm) hinunter auf den Haftklebstoff und wird von diesem durch seine Haftklebrigkeit abgebremst. Die Laufstrecke der Kugel auf der Haftklebstoffoberfläche gilt als Maß für den Tack. Der Tack ist somit umgekehrt proportional der zurückgelegten Strecke.
- Die Prüfung der Lichtbeständigkeit erfolgte mit einer sogenannten Sonnenlichtlampe der Firma Osram mit der Bezeichnung ULTRA-VITALUX ®, Leistungsaufnahme 300 W. Die Proben wurden aus einer Entfernung von 50 cm ununterbrochen offen bestrahlt. Die Temperatur am Ort der Probe betrug dabei jeweils ca. 60 °C. Beurteilt wurde die farbliche Veränderung des Haftklebstoffs sowie die Klebkraft-Veränderung jeweils nach einer und nach zwei Wochen Bestrahlungsdauer. Dies entspricht ungefähr einer jeweils 10-fachen ununterbrochenen realen Sommersonnenbelastung in Mitteleuropa.

### Beispiele

Die Beschichtungen erfolgten in den Beispielen auf einer üblichen Laborbeschichtungsanlage für kontinuierliche Beschichtungen. Die Bahnbreite betrug 50 cm. Die Beschichtungsspaltbreite war zwischen 0 und 1 cm variabel einstellbar. Die Länge des Wärmekanals betrug ca. 12 m. Die Temperatur im Wärmekanal war in vier Zonen einteilbar und jeweils zwischen Raumtemperatur und 120 °C frei wählbar.

Es wurde eine übliche Mehrkomponenten-Misch- und Dosieranlage mit einem dynamischen Mischsystem verwendet. Der Mischkopf war für zwei flüssige Komponenten konzipiert. Der Mischrotor hatte eine variable Drehzahl bis max. ca. 5000 U/min. Bei den Dosierpumpen dieser Anlage handelte es sich um Zahnradpumpen mit einer Förderleistung von max. ca. 2 I/min.

Die Polyol-Komponenten wurden in einem üblichen beheiz- und evakuierbaren Mischkessel gefertigt. Während des jeweils ca. zweistündigen Mischvorgangs wurde die Temperatur der Mischung auf ca. 70 °C eingestellt und zur Entgasung der Komponenten wurde Vakuum angelegt.

In Tabelle 1 sind die zur Herstellung der Polyurethan-Haftklebstoffe verwendeten Basismaterialien aufgeführt, und zwar jeweils mit Handelsnamen und Hersteller. Die genannten Rohstoffe sind alle frei im Handel erhältlich.

**Tabelle 1: Zur Herstellung der Polyurethan-Haftklebstoffe eingesetzte Basismaterialien mit Handelsnamen und Hersteller**

| | | |
|---|---|---|
| Handelsname | Chemische Basis Mittlere Molmasse OH- beziehungsweise NCO-Zahl | Hersteller / Lieferant |
| Voranol P 400 ® | Polypropylenglykol, Diol (M=400) (4643 mmol OH / kg) | Dow |
| Desmophen 1262 BD ® | Polypropylenglykol, Diol (M=430) (4661 mmol OH / kg) | Bayer |
| Desmophen 1112 BD @ | Polypropylenglykol, Diol (M=1000) (1977 mmol OH / kg) | Bayer |
| Acclaim 2220 N ® | Polypropylenglykol, Diol, hochrein, DMC-katalysiert hergestellt (M=2250) (891 mmol OH / kg) | Bayer |
| Acclaim 4220 N ® | Polypropylenglykol, Diol, hochrein, DMC-katalysiert hergestellt (M=4000) (500 mmol OH / kg) | Bayer |
| Desmophen 1380 BT ® | Polypropylenglykol, Triol (M=450) (6774 mmol OH / kg) | Bayer |
| Desmophen 3061 BT ® | Polypropylenglykol, Triol (M=3000) (1000 mmol OH / kg) | Bayer |
| Desmophen 5035 BT ® | Polypropylenglykol, Triol (M=4800) (624 mmol OH / kg) | Bayer |
| Voranol CP 4755 ® | Polypropylenglykol, Triol (M=4700) (616 mmol OH / kg) | Dow |
| Handelsname | Chemische Basis | Hersteller / Lieferant |
| Desmophen 5031 BT ® | Polypropylenglykol, Triol (M=6000) (502 mmol OH / kg) | Bayer |
| Voranol CP 6055 ® | Polypropylenglykol, Triol (M=6000) (491 mmol OH / kg) | Dow |
| Vestanat IPDI ® | Isophorondiisocyanat (M= 222,3) (8998 mmol NCO / kg) | Degussa-Hüls |
| Vestanat TMDI ® | 2,2,4-Trimethyl-hexamethylendiisocyanat (M=210,3) (9500 mmol NCO / kg) | Degussa-Hüls |
| Mark DBTL ® | Dibutylzinndilaurat | Nordmann, Rassmann |
| Tinuvin 292 ® | sterisch gehindertes Amin, Lichtschutzmittel | Ciba |
| Tinuvin 400 ® | Triazin-Derivat, UV-Schutzmittel | Ciba |
| Aerosil R202 ® | hydrophobierte, pyrogene Kieselsäure | Degussa-Hüls |

### Beispiel 1

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 1,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 12,0 | 55,8 mmol OH |
| | Voranol CP 6055 ® | 75,7 | 37,1 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 10,3 | 92,9 mmol NCO |

Die Prüfmuster (50 g/m² Polyurethan-Haftklebstoff auf einer 26 µm dicken Polyesterfolie, siehe oben) erzielten eine Klebkraft a uf S tahl von 3,0 N /cm. Im Schertest wurde eine Haltezeit von 2000 Minuten erreicht. Die Laufstrecke der Kugel im Rolling Ball Test betrug 58 mm. Nach zwei Wochen Bestrahlung mit der Sonnenlichtlampe traten keine Veränderungen auf, weder f arblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war.

Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 2

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 1,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 12,2 | 56,8 mmol OH |
| | Voranol CP 6055 ® | 77,2 | 37,9 mmol OH |
| | Mark DBTL ® | 0,1 | |
| B-Komponente | Vestanat IPDI ® | 10,5 | 94,7 mmol NCO |

Die Prüfmuster (50 g/m² Polyurethan-Haftklebstoff auf einer 26 µm dicken Polyesterfolie, siehe oben) erzielten eine Klebkraft auf Stahl von 3 ,0 N /cm. Im Schertest wurde eine Haltezeit von 2000 Minuten erreicht. Die Laufstrecke der Kugel im Rolling Ball Test betrug 62 mm. Nach einer Woche Bestrahlung mit der Sonnenlichtlampe traten keine Veränderungen auf, weder farblich noch in der Klebkraft. Nach zwei Wochen Bestrahlung traten keine farblichen Veränderungen auf, jedoch war der Haftklebstoff merklich weicher. Die Eigenklebrigkeit hatte zugenommen. Die Klebkraft betrug jetzt 9,0 N/cm. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war.

Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 3

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 2,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 17,8 | 82,5 mmol OH |
| | Voranol CP 6055 ® | 67,3 | 33,1 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 12,9 | 115,6 mmol NCO |

Die Prüfmuster (50 g/m² Polyurethan-Haftklebstoff auf einer 26 µm dicken Polyesterfolie, siehe oben) erzielten eine Klebkraft auf S tahl von 4,0 N/cm. m Schertest wurde eine Haltezeit von 150 Minuten erreicht. Die Laufstrecke der Kugel im Rolling Ball Test betrug 15 mm. Nach zwei Wochen Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war.

Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 4

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 4,0 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 24,4 | 113,5 mmol OH |
| | Voranol CP 6055 ® | 57,8 | 28,3 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 15,8 | 141,8 mmol NCO |

Die Prüfmuster (50 g/m² Polyurethan-Haftklebstoff auf einer 26 µm dicken Polyesterfolie, siehe oben) erzielten eine Klebkraft auf Stahl von 7 ,0 N /cm. Im Schertest wurde eine Haltezeit von 12 Minuten erreicht. Die Laufstrecke der Kugel im Rolling Ball Test betrug kleiner 5 mm. Nach zwei Wochen Bestrahlung mit der Sonnenlichtlampe traten keine Veränderungen auf, weder f arblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich von den meisten Papiersorten auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Die Ablösung von Zeitschriftenpapier war schwierig, aber mit etwas Geschick auch möglich. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 5 (nicht erfindungsgemäß)

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 1,0

| | Rohstoff | Gewichtsanteil [Gew.-%] | Anzahl der OHbeziehungsweise NCO-Gruppen, bezogen auf den prozentualen Gewichtsanteil |
|---|---|---|---|
| A-Komponente | Voranol P 400 ® | 10,2 | 47,6 mmol OH |
| | Voranol CP 4755 ® | 77,3 | 47,6 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 10,5 | 95,2 mmol NCO |

Die Prüfmuster (50 g/m² Polyurethan-Haftklebstoff auf einer 26 µm dicken Polyesterfolie, siehe oben) erzielten eine Klebkraft auf Stahl von 2,1 N/cm. Im Schertest wurde eine Haltezeit von größer 10.000 Minuten erreicht. Die Laufstrecke der Kugel im Rolling Ball Test betrug 32 mm. Nach zwei Wochen Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war.

Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser I eicht w ieder e ntfernen. D ie Klebkraft I ag a nschließend w ieder a uf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 6 (nicht erfindungsgemäß)

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 1,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 10,4 | 48,5 mmol OH |
| | Voranol CP 47.55 ® | 78,7 | 48,5 mmol OH |
| | Mark DBTL ® | 0,1 | |
| B-Komponente | Vestanat IPDI ® | 10,8 | 97,0 mmol NCO |

Die Prüfmuster (50 g/m² Polyurethan-Haftklebstoff auf einer 26 µm dicken Polyesterfolie, siehe oben) erzielten eine Klebkraft auf Stahl von 2,1 N /cm. Im Schertest wurde eine Haltezeit von größer 10.000 Minuten erreicht. Die Laufstrecke der Kugel im Rolling Ball Test betrug 32 mm. Nach einer Woche Bestrahlung mit der Sonnenlichtlampe traten keine Veränderungen auf, weder farblich noch in der Klebkraft. Nach zwei Wochen Bestrahlung traten keine farblichen Veränderungen auf, jedoch war der Haftklebstoff merklich weicher. Die Eigenklebrigkeit hatte zugenommen. Die Klebkraft betrug jetzt 7,9 N/cm. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war.

Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 7

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 1,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 14,2 | 66,1 mmol OH |
| | Voranol CP 4755 ® | 71,5 | 44,1 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 12,3 | 110,2 mmol NCO |

Die Prüfmuster (50 g/m² Polyurethan-Haftklebstoff auf einer 26 µm dicken Polyesterfolie, siehe oben) erzielten eine Klebkraft auf Stahl von 2 ,6 N /cm. Im Schertest wurde eine Haltezeit von größer 10.000 Minuten erreicht. Die Laufstrecke der Kugel im Rolling Ball Test betrug 20 mm. Nach zwei Wochen Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war.

Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 8

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 2,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 20,6 | 95,9 mmol OH |
| | Voranol CP 4755 ® | 62,4 | 38,4 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 15,0 | 134,3 mmol NCO |

Die Prüfmuster (50 g/m² Polyurethan-Haftklebstoff auf einer 26 µm dicken Polyesterfolie, siehe oben) erzielten eine Klebkraft auf Stahl von 3,9 N/cm. Im Schertest wurde eine Haltezeit von 145 Minuten erreicht. Die Laufstrecke der Kugel im Rolling Ball Test betrug 20 mm. Nach zwei Wochen Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war.

Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 9

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 4,0 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 27,8 | 129,0 mmol OH |
| | Voranol CP 4755 ® | 52,3 | 32,2 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 17,9 | 161,2 mmol NCO |

Die Prüfmuster (50 g/m² Polyurethan-Haftklebstoff auf einer 26 µm dicken Polyesterfolie, siehe oben) erzielten eine Klebkraft auf S tahl von 5 ,4 N /cm. Im S chertest w urde e ine Haltezeit von 12 Minuten erreicht. Die Laufstrecke der Kugel im Rolling Ball Test betrug kleiner 5 mm. Nach zwei Wochen Bestrahlung mit der Sonnenlichtlampe traten keine Veränderungen auf, weder f arblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich von den meisten Papiersorten auch nach einem halben Jahr Verklebungszeit problemlos wieder entfernen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war.

Die Ablösung von Zeitschriftenpapier war schwierig, aber mit etwas Geschick auch möglich. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 10

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 9,0 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 40,6 | 188,9 mmol OH |
| | Voranol CP 4755 ® | 34,0 | 20,9 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 23,4 | 209,8 mmol NCO |

Die Prüfmuster (50 g/m² Polyurethan-Haftklebstoff auf einer 26 µm dicken Polyesterfolie, siehe oben) erzielten eine Klebkraft auf S tahl von 7 ,0 N /cm. Im S chertest w urde e ine Haltezeit von 10 Minuten erreicht. Die Laufstrecke der Kugel im Rolling Ball Test betrug kleiner 5 mm. Nach zwei Wochen Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich von den meisten Papiersorten auch nach einem halben Jahr Verklebungszeit problemlos wieder entfernen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war.

Die Ablösung von Zeitschriftenpapier war schwierig, aber mit etwas Geschick auch möglich. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 11 (nicht erfindungsgemäß)

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 0,7

| | Rohstoff | Gewichtsanteil [Gew.-%] | Anzahl der OHbeziehungsweise NCO-Gruppen, bezogen auf den prozentualen Gewichtsanteil |
|---|---|---|---|
| A-Komponente | Desmophen 1262 BD ® | 11,0 | 51,3 mmol OH |
| | Desmophen 3061 BT ® | 73,1 | 73,1 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 13,9 | 124,4 mmol NCO |

Die Prüfmuster (50 g/m² Polyurethan-Haftklebstoff auf einer 26 µm dicken Polyesterfolie, siehe oben) erzielten eine Klebkraft auf Stahl von 1 ,0 N /cm. I m Schertest wurde eine Haltezeit von größer 10.000 Minuten erreicht. Die Laufstrecke der Kugel im Rolling Ball Test betrug 33 mm. Nach zwei Wochen Bestrahlung mit der Sonnentichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 12

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 1,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 19,7 | 91,9 mmol OH |
| | Desmophen 3061 BT ® | 61,2 | 61,2 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 17,1 | 153,1 mmol NCO |

Die Prüfmuster (50 g/m² Polyurethan-Haftklebstoff auf einer 26 µm dicken Polyesterfolie, siehe oben) erzielten eine Klebkraft a uf S tahl von 1 ,5 N /cm. Im S chertest w urde e ine Haltezeit von größer 10.000 Minuten erreicht. Die Laufstrecke der Kugel im Rolling Ball Test betrug 10 mm. Nach zwei Wochen Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 13

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 2,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 27,3 | 127,2 mmol OH |
| | Desmophen 3061 BT ® | 50,9 | 50,9 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 19,8 | 178,1 mmol NCO |

Die Prüfmuster (50 g/m² Polyurethan-Haftklebstoff auf einer 26 µm dicken Polyesterfolie, siehe oben) erzielten eine Klebkraft auf Stahl von 3,5 N/cm. Im S chertest w urde e ine Haltezeit von 2250 Minuten erreicht. Die Laufstrecke der Kugel im Rolling Ball Test betrug kleiner 5 mm. Nach zwei Wochen Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 14

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 4,0 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 34,9 | 162,8 mmol OH |
| | Desmophen 3061 BT ® | 40,6 | 40,6 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 22,5 | 203,4 mmol NCO |

Die Prüfmuster (50 g/m² Polyurethan-Haftklebstoff auf einer 26 µm dicken Polyesterfolie, siehe oben) erzielten eine Klebkraft a uf S tahl von 6,1 N /cm. Im S chertest w urde e ine Haltezeit von 10 Minuten erreicht. Die Laufstrecke der Kugel im Rolling Ball Test betrug 5 mm. Nach zwei Wochen Bestrahlung mit der Sonnenlichtlampe traten keine Veränderungen auf, weder f arblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 15 (nicht erfindungsgemäß)

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 1,0

| | Rohstoff | Gewichtsanteil [Gew.-%] | Anzahl der OHbeziehungsweise NCO-Gruppen, bezogen auf den prozentualen Gewichtsanteil |
|---|---|---|---|
| A-Komponente | Desmophen 1262 BD ® | 14,8 | 68,8 mmol OH |
| | Desmophen 3061 BT ® | 68,8 | 68,8 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat TMDI ® | 14,5 | 137,6 mmol NCO |

Die Prüfmuster (50 g/m² Polyurethan-Haftklebstoff auf einer 26 µm dicken Polyesterfolie, siehe oben) erzielten eine Klebkraft auf Stahl von 1,5 N /cm. I m Schertest wurde eine Haltezeit von 5400 Minuten erreicht. Die Laufstrecke der Kugel im Rolling Ball Test betrug 20 mm. Nach zwei Wochen Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 16

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 1,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 19,9 | 92,8 mmol OH |
| | Desmophen 3061 BT ® | 61,8 | 61,8 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat TMDI ® | 16,3 | 154,6 mmol NCO |

Die Prüfmuster (50 g/m² Polyurethan-Haftklebstoff auf einer 26 µm dicken Polyesterfolie, siehe oben) erzielten eine Klebkraft auf Stahl von 2 ,2 N /cm. Im Schertest wurde eine Haltezeit von 4300 Minuten erreicht. Die Laufstrecke der Kugel im Rolling Ball Test betrug kleiner 5 mm. Nach zwei Wochen Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 17

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 2,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 27,6 | 128,6 mmol OH |
| | Desmophen 3061 BT ® | 51,5 | 51,5 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat TMDI ® | 18,9 | 180,1 mmol NCO |

Die Prüfmuster (50 g/m² Polyurethan-Haftklebstoff auf einer 26 µm dicken Polyesterfolie, siehe oben) erzielten eine Klebkraft auf Stahl von 4 ,8 N /cm. Im Schertest wurde eine Haltezeit von 120 Minuten erreicht. Die Laufstrecke der Kugel im Rolling Ball Test betrug kleiner 5 mm. Nach zwei Wochen Bestrahlung mit der Sonnenlichtlampe traten keine Veränderungen auf, weder f arblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 18

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 4,0 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 35,3 | 164,6 mmol OH |
| | Desmophen 3061 BT ® | 41,0 | 41,0 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat TMDI ® | 21,7 | 205,6 mmol NCO |

Die Prüfmuster (50 g/m² Polyurethan-Haftklebstoff auf einer 26 µm dicken Polyesterfolie, siehe oben) erzielten eine Klebkraft auf Stahl von 6 ,3 N /cm. Im Schertest wurde eine Haltezeit von 8 Minuten erreicht. Die Laufstrecke der Kugel im Rolling Ball Test betrug kleiner 5 mm. Nach zwei Wochen Bestrahlung mit der Sonnenlichtlampe traten keine Veränderungen auf, weder f arblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich von den meisten Papiersorten auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Die Ablösung von Zeitschriftenpapier war schwierig, aber mit etwas Geschick auch möglich. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 19 (nicht erfindungsgemäß)

Der erfindungsgemäße Polyurethan-Haftklebstoff setzt sich wie folgt zusammen:
NCO/OH - Verhältnis: 1,0
Verhältnis Anzahl Diol-OH / Anzahl Triol-OH: 1,0

| | Rohstoff | Gewichtsanteil [Gew.-%] | Anzahl der OHbeziehungsweise NCO-Gruppen, bezogen auf den prozentualen Gewichtsanteil |
|---|---|---|---|
| A-Komponente | Desmophen 1112 BD ® | 18,3 | 36,0 mmol OH |
| | Desmophen 5031 BT ® | 71,7 | 36,0 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 8,0 | 72,0 mmol NCO |

Die Prüfmuster (50 g/m² Polyurethan-Haftkletistoff auf einer 26 µm dicken Polyesterfolie, siehe oben) erzielten eine Klebkraft auf Stahl von 1 ,2 N /cm. I m Schertest wurde eine Haltezeit von 2200 Minuten erreicht. Die Laufstrecke der Kugel im Rolling Ball Test betrug 33 mm. Nach zwei Wochen Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 20

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 1,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1112 BD ® | 24,6 | 48,6 mmol OH |
| | Desmophen 5031 BT ® | 64,4 | 32,3 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 9,0 | 80,9 mmol NCO |

Die Prüfmuster (50 g/m² Polyurethan-Haftklebstoff auf einer 26 µm dicken Polyesterfolie, siehe oben) erzielten eine Klebkraft auf Stahl von 1 ,8 N /cm. Im Schertest wurde eine Haltezeit von 1450 Minuten erreicht. Die Laufstrecke der Kugel im Rolling Ball Test betrug 17 mm. Nach zwei Wochen Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 21

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 2,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1112 BD ® | 34,0 | 67,2 mmol OH |
| | Desmophen 5031 BT ® | 53,6 | 26,9 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 10,4 | 94,1 mmol NCO |

Die Prüfmuster (50 g/m² Polyurethan-Haftklebstoff auf einer 26 µm dicken Polyesterfolie, siehe oben) erzielten eine Klebkraft auf Stahl von 2 ,3 N /cm. Im Schertest wurde eine Haltezeit von 850 Minuten erreicht. Die Laufstrecke der Kugel im Rolling Ball Test betrug 5 mm. Nach zwei Wochen Bestrahlung mit der Sonnenlichtlampe traten keine Veränderungen auf, weder f arblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 22

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 4,0 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1112 BD ® | 43,4 | 85,6 mmol OH |
| | Desmophen 5031 BT ® | 42,7 | 21,5 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 11,9 | 107,1 mmol NCO |

Die Prüfmuster (50 g/m² Polyurethan-Haftklebstoff auf einer 26 µm dicken Polyesterfolie, siehe oben) erzielten eine Klebkraft auf Stahl von 6,9 N /cm. Im Schertest wurde eine Haltezeit von 10 Minuten erreicht. Die Laufstrecke der Kugel im Rolling Ball Test betrug 5 mm. Nach zwei Wochen Bestrahlung mit der Sonnenlichtlampe traten keine Veränderungen auf, weder f arblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 23 (nicht erfindungsgemäß)

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 1,0

| | Rohstoff | Gewichtsanteil [Gew.-%] | Anzahl der OHbeziehungsweise NCO-Gruppen, bezogen auf den prozentualen Gewichtsanteil |
|---|---|---|---|
| A-Komponente | Desmophen 1112 BD ® | 21,2 | 42,0 mmol OH |
| | Desmophen 5035 BT ® | 67,4 | 42,0 mmol OH |
| | Mark DBTL ® | 0.1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 9,4 | 84,0 mmol NCO |

Die Prüfmuster (50 g/m² Polyurethan-Haftklebstoff auf einer 26 µm dicken Polyesterfolie, siehe oben) erzielten eine Klebkraft auf Stahl von 1,7 N /cm. I m Schertest wurde eine Haltezeit von 8200 Minuten erreicht. Die Laufstrecke der Kugel im Rolling Ball Test betrug 80 mm. Nach zwei Wochen Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 24

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 1,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1112 BD ® | 28,3 | 55,8 mmol OH |
| | Desmophen 5035 BT ® | 59,4 | 37,1 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 10,3 | 92,9 mmol NCO |

Die Prüfmuster (50 g/m² Polyurethan-Haftklebstoff auf einer 26 µm dicken Polyesterfolie, siehe oben) erzielten eine Klebkraft auf Stahl von 2 ,5 N /cm. Im Schertest wurde eine Haltezeit von 5600 Minuten erreicht. Die Laufstrecke der Kugel im Rolling Ball Test betrug 35 mm. Nach zwei Wochen Bestrahlung mit der Sonnenlichtlampe traten keine Veränderungen auf, weder f arblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 25

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 2,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1112 BD ® | 38,1 | 75,3 mmol OH |
| | Desmophen 5035 BT ® | 48,3 | 30,1 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 11,6 | 105,4 mmol NCO |

Die Prüfmuster (50 g/m² Polyurethan-Haftklebstoff auf einer 26 µm dicken Polyesterfolie, siehe oben) erzielten eine Klebkraft auf Stahl von 3 ,1 N /cm. Im Schertest wurde eine Haltezeit von 120 Minuten erreicht. Die Laufstrecke der Kugel im Rolling Ball Test betrug 25 mm. Nach zwei Wochen Bestrahlung mit der Sonnenlichtlampe traten keine Veränderungen auf, weder f arblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 26

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 4,0 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1112 BD ® | 44,8 | 88,6 mmol OH |
| | Desmophen 5035 BT ® | 40,6 | 25,3 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 12,6 | 113,9 mmol NCO |

Die Prüfmuster (50 g/m² Polyurethan-Haftklebstoff auf einer 26 µm dicken Polyesterfolie, siehe oben) erzielten eine Klebkraft auf Stahl von 6 ,3 N /cm. Im Schertest wurde eine Haltezeit von 10 Minuten erreicht. Die Laufstrecke der Kugel im Rolling Ball Test betrug kleiner 5 mm. Nach zwei Wochen Bestrahlung mit der Sonnenlichtlampe traten keine Veränderungen auf, weder f arblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 27 (nicht erfindungsgemäß)

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 1,0

| | Rohstoff | Gewichtsanteil [Gew.-%] | Anzahl der OHbeziehungsweise NCO-Gruppen, bezogen auf den prozentualen Gewichtsanteil |
|---|---|---|---|
| A-Komponente | Desmophen 1112 BD ® | 28,7 | 56,7 mmol OH |
| | Desmophen 3061 BT ® | 56,7 | 56,7 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 12,6 | 113,4 mmol NCO |

Die Prüfmuster (50 g/m² Polyurethan-Haftklebstoff auf einer 26 µm dicken Polyesterfolie, siehe oben) erzielten eine Klebkraft auf Stahl von 1,5 N/cm. Im Schertest wurde eine Haltezeit von größer 10.000 Minuten erreicht. Die Laufstrecke der Kugel im Rolling Ball Test betrug 230 mm. Nach zwei Wochen Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 28

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 1,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1112 BD ® | 36,6 | 72,2 mmol OH |
| | Desmophen 3061 BT ® | 48,1 | 48,1 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 13,3 | 120,3 mmol NCO |

Die Prüfmuster (50 g/m² Polyurethan-Haftklebstoff auf einer 26 µm dicken Polyesterfolie, siehe oben) erzielten eine Klebkraft auf Stahl von 2 ,2 N /cm. Im Schertest wurde eine Haltezeit von größer 10.000 Minuten erreicht. Die Laufstrecke der Kugel im Rolling Ball Test betrug 90 mm. Nach zwei Wochen Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 29

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 2,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1112 BD ® | 46,7 | 92,4 mmol OH |
| | Desmophen 3061 BT ® | 37,0 | 37,0 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 14,3 | 129,4 mmol NCO |

Die Prüfmuster (50 g/m² Polyurethan-Haftklebstoff auf einer 26 µm dicken Polyesterfolie, siehe oben) erzielten eine Klebkraft auf Stahl von 3,4 N/cm. Im Schertest wurde eine Haltezeit von 890 Minuten erreicht. Die Laufstrecke der Kugel im Rolling Ball Test betrug 35 mm. Nach zwei Wochen Bestrahlung mit der Sonnenlichtlampe traten keine Veränderungen auf, weder f arblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 30

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 4,0 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1112 BD ® | 55,4 | 109,4 mmol OH |
| | Desmophen 3061 BT ® | 27,4 | 27,4 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 15,2 | 136,8 mmol NCO |

Die Prüfmuster (50 g/m² Polyurethan-Haftklebstoff auf einer 26 µm dicken Polyesterfolie, siehe oben) erzielten eine Klebkraft auf Stahl von 5 ,2 N /cm. Im Schertest wurde eine Haltezeit von 10 Minuten erreicht. Die Laufstrecke der Kugel im Rolling Ball Test betrug 15 mm. Nach zwei Wochen Bestrahlung mit der Sonnenlichtlampe traten keine Veränderungen auf, weder f arblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 31 (nicht erfindungsgemäß)

Der erfindungsgemäße Polyurethan-Haftklebstoff setzt sich wie folgt zusammen:
NCO / OH - Verhältnis:: 1,0
Verhältnis Anzahl Diol-OH / Anzahl Triol-OH: 0,7

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Acclaim 2220 N ® | 68,8 | 61,2 mmol OH |
| | Desmophen 1380 BT ® | 12,7 | 87,3 mmol OH |
| | Mark DBTL ® | 0,1 | |
| | Tinuvin 292 ® | 0,3 | |
| | Tinuvin 400 ® | 0.6 | |
| | Aerosil R202 ® | 1,0 | |
| B-Komponente | Vestanat IPDI ® | 16,5 | 148,5 mmol NCO |

Die Prüfmuster (50 g/m² Polyurethan-Haftklebstoff auf einer 26 µm dicken Polyesterfolie, siehe oben) erzielten eine Klebkraft auf Stahl von 3 ,4 N/cm. Im Schertest wurde eine Haltezeit von größer 10.000 Minuten erreicht. Die Laufstrecke der Kugel im Rolling Ball Test betrug 20 mm. Nach zwei Wochen Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 32 (nicht erfindungsgemäß)

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 1,0

| | Rohstoff | Gewichtsanteil [Gew.-%] | Anzahl der OHbeziehungsweise NCO-Gruppen, bezogen auf den prozentualen Gewichtsanteil |
|---|---|---|---|
| A-Komponente | Acclaim 2220 N ® | 73,7 | 65,6 mmol OH |
| | Desmophen 1380 BT ® | 9,6 | 65,6 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 14,7 | 131,2 mmol NCO |

Die Prüfmuster (50 g/m² Polyurethan-Haftklebstoff auf einer 26 µm dicken Polyesterfolie, siehe oben) erzielten eine Klebkraft auf Stahl von 4,8 N /cm. Im Schertest wurde eine Haltezeit von 90 Minuten erreicht. Die Laufstrecke der Kugel im Rolling Ball Test betrug 10 mm. Nach zwei Wochen Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfemen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 33

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 1,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Acclaim 2220 N ® | 78,1 | 69,5 mmol OH |
| | Desmophen 1380 BT ® | 7,0 | 46,5 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 12,9 | 116,0 mmol NCO |

Die Prüfmuster (50 g/m² Polyurethan-Haftklebstoff auf einer 26 µm dicken Polyesterfolie, siehe oben) erzielten eine Klebkraft auf Stahl von 5 ,6 N /cm. Im Schertest wurde eine Haltezeit von 10 Minuten erreicht. Die Laufstrecke der Kugel im Rolling Ball Test betrug kleiner 5 mm. Nach zwei Wochen Bestrahlung mit der Sonnenlichtlampe traten keine Veränderungen auf, weder f arblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 34 (nicht erfindungsgemäß)

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 0,7

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Acclaim 4220 N ® | 79,0 | 39,5 mmol OH |
| | Baycoll 1380 BT ® | 8,3 | 56,5 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 10,7 | 96,0 mmol NCO |

Die Prüfmuster (50 g/m² Polyurethan-Haftklebstoff auf einer 26 µm dicken Polyesterfolie, siehe oben) erzielten eine Klebkraft auf Stahl von 3 ,8 N /cm. Im Schertest wurde eine Haltezeit von 6400 Minuten erreicht. Die Laufstrecke der Kugel im Rolling Ball Test betrug 35 mm. Nach zwei Wochen Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 35 (nicht erfindungsgemäß)

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 1,0

| | Rohstoff | Gewichtsanteil [Gew.-%] | Anzahl der OHbeziehungsweise NCO-Gruppen, bezogen auf den prozentualen Gewichtsanteil |
|---|---|---|---|
| A-Komponente | Acclaim 4220 N ® | 82,7 | 41,4 mmol OH |
| | Desmophen 1380 BT ® | 6,2 | 41,4 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 9,1 | 82,8 mmol NCO |

Die Prüfmuster (50 g/m² Polyurethan-Haftklebstoff auf einer 26 µm dicken Polyesterfolie, siehe oben) erzielten eine Klebkraft auf Stahl von 4 ,3 N /cm. Im Schertest w u rde eine Haltezeit von 100 Minuten erreicht. Die Laufstrecke der Kugel im Rolling Ball Test betrug 15 mm. Nach zwei Wochen Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die, Klebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Beispiel 36

Der erfindungsgemäße Polyurethan-Haftklebstoff setzt sich wie folgt zusammen:

| | | | |
|---|---|---|---|
| NCO / OH - Verhältnis: 1,0 | | | |
| Verhältnis Anzahl Diol-OH / Anzahl Triol-OH: 1,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Acclaim 4220 N ® | 85,6 | 42,8 mmol OH |
| | Desmophen 1380 BT ® | 4,3 | 28,7 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 8,1 | 71,5 mmol NCO |

Die Prüfmuster (50 g/m² Polyurethan-Haftklebstoff auf einer 26 µm dicken Polyesterfolie, siehe oben) erzielten eine Klebkraft auf Stahl von 5 ,6 N /cm. Im Schertest wurde eine Haltezeit von 10 Minuten erreicht. Die Laufstrecke der Kugel im Rolling Ball Test betrug kleiner 5 mm. Nach zwei Wochen Bestrahlung mit der Sonnenlichtlampe traten keine Veränderungen auf, weder f arblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder entfernen, ohne Rückstände oder fettig aussehende Flecken zu hinterlassen und ohne die Substrate zu schädigen.

Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Kiebkraft lag anschließend wieder auf dem ursprüngliche Niveau. Die Mehrfachverwendbarkeit wurde geprüft, indem ein Prüfmuster 20 mal hintereinander auf Schreibpapier geklebt und wieder abgelöst wurde. Die Klebkraft lag anschließend immer noch auf dem ursprünglichen Niveau.

### Vergleichsbeispiele

### Vergleichsbeispiel 1

| | | | |
|---|---|---|---|
| Polyurethan-Zusammensetzung: | | | |
| NCO / OH - Verhältnis: 0,7 | | | |
| Verhältnis Anzahl Diol-OH / Anzahl Triol-OH: 1,5 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 12,5 | 57,6 mmol OH |
| | Voranol CP 6055 ® | 78,2 | 38,4 mmol OH |
| | Mark DBTL ® | 0,1 | |
| | Tinuvin 292 ® | 0,3 | |
| | .Tinuvin 400 ® | 0,6 | |
| | Aerosil R202 ® | 1,0 | |
| B-Komponente | Vestanat IPDI ® | 7,4 | 67,2 mmol NCO |

Die Prüfmuster (50 g/m² Polyurethan-Haftklebstoff auf einer 26 µm dicken Polyesterfolie, siehe oben) erzielten eine Klebkraft auf Stahl von 2,4 N /cm. Im Schertest wurde eine Haltezeit von 5 Minuten erreicht. Die Laufstrecke der Kugel im Rolling Ball Test betrug 5 mm.
Der Haftklebstoff wurde auf unterschiedliche Papiersorten geklebt. Bereits nach einem Tag hinterließ er fettig aussehende Flecken auf den Papieren.

### Vergleichsbeispiel 2

| | | | |
|---|---|---|---|
| Polyurethan-Zusammensetzung: | | | |
| NCO / OH - Verhältnis: 1,0 | | | |
| Verhältnis Anzahl Diol-OH / Anzahl Triol-OH: 12,0 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1262 BD ® | 42,0 | 195,6 mmol OH |
| | Desmophen 5031 BT ® | 32,5 | 16,4 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 23,5 | 212,0 mmol NCO |

Die Prüfmuster (50 g/m² Polyurethan-Haftklebstoff auf einer 26 µm dicken Polyesterfolie, siehe oben) erzielten eine Klebkraft auf Stahl von 2 ,1 N /cm. Im Schertest wurde eine Haltezeit von kleiner 5 Minuten erreicht. Die Laufstrecke der Kugel im Rolling Ball Test betrug kleiner 5 mm.
Der Haftklebstoff w urde a uf u nterschiedliche P apiersorten geklebt. B ereits n ach e inem Tag hinterließ er fettig aussehende Flecken auf den Papieren.

### Vergleichsbeispiel 3

| | | | |
|---|---|---|---|
| Polyurethan-Zusammensetzung: | | | |
| NCO / OH - Verhältnis: 1,0 | | | |
| Verhältnis Anzahl Diol-OH / Anzahl Triol-OH: 0,1 | | | |

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Acclaim 2200 N ® | 28,8 | 25,6 mmol OH |
| | Desmophen 1380 BT ® | 37,8 | 256,0 mmol OH |
| | Mark DBTL ® | 0,1 | |
| | Tinuvin 292 ® | 0,3 | |
| | Tinuvin 400 ® | 0,6 | |
| | Aerosil R202 ® | 1,0 | |
| B-Komponente | Vestanat IPDI ® | 31,4 | 281,6 mmol NCO |

Die Prüfmuster (50 g/m² Polyurethan-Haftklebstoff auf einer 26 µm dicken Polyesterfolie, siehe oben) erzielten eine Klebkraft auf Stahl von kleiner 0,1 N/cm. Im Schertest wurde eine Haltezeit von kleiner 5 Minuten erreicht. Die Laufstrecke der Kugel im Rolling Ball Test war größer 300 mm. Die Klebkraft war zu gering, um Papier, Pappe oder andere leichte Gegenstände sicher zu fixieren.

## Patentansprüche

1. Haftklebstoff auf Basis von Polyurethan, **dadurch gekennzeichnet, dass** sich das Polyurethan aus folgenden miteinander zur Reaktion gebrachten Ausgangsstoffen in den angegeben Verhältnissen zusammensetzt:
a) mindestens einem aliphatischen oder alicyclischen Diisocyanat mit jeweils unsymmetrischer Molekülstruktur,
b) einer Kombination aus mindestens einem Polypropylenglykol-Diol und mindestens einem Polypropylenglykol-Triol,
wobei das Verhältnis der Anzahl der Hydroxylgruppen der Diol-Komponente zu der Anzahl der Hydroxylgruppen der Triol-Komponente zwischen 1,5 und 9,0 liegt, wobei weiterhin das Verhältnis der Anzahl der Isocyanat-Gruppen zur Gesamtanzahl der Hydroxylgruppen zwischen 0,9 und 1,1, bevorzugt zwischen 0,95 und 1,05 liegt
und wobei die Diole und Triole alternativ jeweils wie folgt ausgewählt und kombiniert werden:
- Diole mit einem Molekulargewicht von kleiner oder gleich 1000 werden mit Triolen kombiniert, deren Molekulargewicht größer 1000, bevorzugt größer oder gleich 3000 ist,
- Diole mit einem Molekulargewicht von größer 1000 werden mit Triolen kombiniert, deren Molekulargewicht kleiner 1000 ist.

2. Haftklebstoff nach Anspruch 1, **dadurch gekennzeichnet, dass** das Diisocyanat 1-Isocyanatomethyl-3-isocyanato-1,5,5-trimethylcyclohexan (Isophorondiisocyanat), 1-Methyl-2,4-düsocyanato-cyclohexan, 1,6-Diisocyanato-2,2,4-trimethylhexan, 1,6-Diisocyanato-2,4,4-trimethylhexan, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, Dicyclohexylmethan-2,4'-diisocyanat, 2-Heptyl-3,4-bis(9-isocyanatononyl)-1-pentyl-cyclohexan, Ethylethylendiisocyanat, 2,2,4-Trimethyl-hexamethylendiisocyanat oder ein chloriertes, bromiertes, schwefel- oder phosphorhaltiges Diisocyanat mit unsymmetrischer Molekülstruktur ist, bevorzugt Isophorondiisocyanat ist.

3. Haftklebstoff nach Anspruch 1 oder 2, **dadurch gekennzeichnet, dass** Rezeptierungsbestandteile wie Katalysatoren, Alterungsschutzmittel (Antioxidantien), Lichtschutzmittel, UV-Absorber, rheologische Additive sowie sonstige Hilfs- und Zusatzstoffe zugemischt sind.

4. Verfahren zur Herstellung eines Haftklebstoffs nach zumindest einem der vorherigen Ansprüche, wobei
a) in einem Behälter A im wesentlichen die vorgemischte Polypropylenglykol-Kombination (Polyol-Komponente) und in einem Behälter B im wesentlichen die Isocyanat-Komponente vorgelegt werden, wobei gegebenenfalls die weiteren Rezeptierungsbestandteile diesen Komponenten bereits zuvor in einem üblichen Mischverfahren zugemischt wurden,
b) die Polyol- und die Isocyanat-Komponente über Präzisionspumpen durch den Mischkopf oder das Mischrohr einer Mehrkomponenten-Misch- und Dosieranlage gefördert, dort homogen vermischt und somit zur Reaktion gebracht werden,
c) die somit gemischten, miteinander chemisch reagierenden Komponenten unmittelbar danach auf ein bahnförmiges Trägermaterial aufgebracht werden, das sich bevorzugt mit konstanter Geschwindigkeit bewegt,
d) das mit der reagierenden Polyurethanmasse beschichtete Trägermaterial durch einen Wärmekanal geführt wird, in dem die Polyurethanmasse zum Haftklebstoff aushärtet,
e) das beschichtete Trägermaterial abschließend in einer Wickelstation aufgewickelt wird.

5. Verfahren zur Herstellung eines Haftklebstoffs nach zumindest einem der vorherigen Ansprüche, **dadurch gekennzeichnet, dass** die Herstellung ohne Lösemittel erfolgt.

6. Verfahren zur Herstellung eines Haftklebstoffs nach zumindest einem der vorherigen Ansprüche, **dadurch gekennzeichnet, dass** die Herstellung ohne Wasserzusatz erfolgt.

7. Verwendung eines Haftklebstoffs nach zumindest einem der vorherigen Ansprüche zur Herstellung von selbstklebenden Artikeln.

8. Verwendung eines Haftklebstoffs nach zumindest einem der vorherigen Ansprüche zur Befestigung von Notizzetteln, Papierblättern, Kalenderblättern, Streifen, Karten oder Schachteln aus Pappe, Kartonmaterial oder Kunststoff, kleinen Gebrauchsgegenstände aus Kunststoff, Holz, Glas, Stein oder Metall.

## Claims

1. Pressure-sensitive adhesive based on polyurethane, **characterized in that** the polyurethane is composed of the following starting materials which are reacted with one another in the stated proportions:
a) at least one aliphatic or alicyclic diisocyanate having in each case an asymmetrical molecular structure,
b) a combination of at least one polypropylene glycol diol and at least one polypropylene glycol triol,
the ratio of the number of hydroxyl groups in the diol component to the number of hydroxyl groups in the triol component being between 1.5 and 9.0, additionally the ratio of the number of isocyanate groups to the total number of hydroxyl groups being between 0.9 and 1.1, preferably between 0.95 and 1.05,
and the diols and triols alternatively being selected and combined in each case as follows:
- diols having a molecular weight of less than or equal to 1000 are combined with triols whose molecular weight is greater than 1000, preferably greater than or equal to 3000,
- diols having a molecular weight of greater than 1000 are combined with triols whose molecular weight is less than 1000.

2. Pressure-sensitive adhesive according to Claim 1, **characterized in that** the diisocyanate is 1-isocyanatomethyl-3-isocyanato-1,5,5-trimethylcyclohexane (isophorone diisocyanate), 1-methyl-2,4-diisocyanatocyclohexane, 1,6-diisocyanato-2,2,4-trimethylhexane, 1,6-diisocyanato-2,4,4-trimethylhexane, 5-isocyanato-1-(2-isocyanatoeth-1-yl)-1,3,3-trimethylcyclohexane, 5-isocyanato-1-(3-isocyanatoprop-1-yl)-1,3,3-trimethylcyclohexane, 5-isocyanato-1-(4-isocyanatobut-1-yl)-1,3,3-trimethylcyclohexane, 1-isocyanato-2-(3-isocyanatoprop-1-yl)cyclohexane, 1-isocyanato-2-(2-isocyanatoeth-1-yl)cyclohexane, dicyclohexylmethane 2,4'-diisocyanate, 2-heptyl-3,4-bis(9-isocyanatononyl)-1-pentylcyclohexane, ethylethylene diisocyanate, 2,2,4-trimethylhexamethylene diisocyanate or a chlorinated, brominated, sulphur-containing or phosphorus-containing diisocyanate having an asymmetrical molecular structure, preferably isophorone diisocyanate.

3. Pressure-sensitive adhesive according to Claim 1 or 2, **characterized in that** formulating ingredients, such as catalysts, ageing inhibitors (antioxidants), light stabilizers, UV absorbers, rheological additives, and also other auxiliaries and additives, are admixed.

4. Process for preparing a pressure-sensitive adhesive according to at least one of the preceding claims, where
a) a vessel A is charged substantially with the premixed polypropylene glycol combination (polyol component) and a vessel B is charged substantially with the isocyanate component, it being possible for the further formulating ingredients further to have been mixed into these components beforehand in a standard mixing procedure,
b) the polyol component and the isocyanate component are conveyed via precision pumps through the mixing head or mixing tube of a multi-component mixing and metering unit, where they are homogeneously mixed and consequently reacted,
c) the chemically inter-reactive components mixed in this way are applied immediately thereafter to a web-form backing material which is preferably moving at a constant speed,
d) the backing material coated with the reactive polyurethane composition is passed through a heating tunnel in which the polyurethane composition cures to give the pressure-sensitive adhesive,
e) finally the coated backing material is wound up in a winding station.

5. Process for preparing a pressure-sensitive adhesive according to at least one of the preceding claims, **characterized in that** the preparation takes place without solvent.

6. Process for preparing a pressure-sensitive adhesive according to at least one of the preceding claims, **characterized in that** the preparation takes place without addition of water.

7. Use of a pressure-sensitive adhesive according to at least one of the preceding claims for producing self-adhesive articles.

8. Use of a pressure-sensitive adhesive according to at least one of the preceding claims for fixing notes, sheets of paper, calendar pages, strips, cards or boxes made of paperboard, cardboard or plastic, or small utility articles made of plastic, wood, glass, stone or metal.

## Revendications

1. Autoadhésif à base de polyuréthane, **caractérisé en ce que** le polyuréthane est constitué par les substances de départ suivantes, amenées à réagir les unes avec les autres, dans les rapports indiquées :
a) au moins un diisocyanate aliphatique ou alicyclique présentant à chaque fois une structure moléculaire asymétrique,
b) une combinaison d'au moins un polypropylèneglycoldiol et d'au moins un polypropylèneglycoltriol,
le rapport du nombre de groupes hydroxyle du composant diol au nombre de groupes hydroxyle du composant triol se situant entre 1,5 et 9,0, le rapport du nombre de groupes isocyanate au nombre total de groupes hydroxyle étant en outre situé entre 0,9 et 1,1, de préférence entre 0,95 et 1,05 les diols et les triols étant choisis et combinés alternativement à chaque fois comme suit :
- des diols présentant un poids moléculaire inférieur ou égal à 1000 sont combinés avec des triols, dont le poids moléculaire est supérieur à 1000, de préférence supérieur ou égal à 3000,
- des diols présentant un poids moléculaire supérieur à 1000 sont combinés avec des triols, dont le poids moléculaire est inférieur à 1000.

2. Autoadhésif selon la revendication 1, **caractérisé en ce que** le diisocyanate est le 1-isocyanatométhyl-3-isocyanato-1,5,5-triméthylcyclohexane (isophoronediisocyanate), le 1-méthyl-2,4-diisocyanatocyclohexane, le 1,6-diisocyanato-2,2,4-triméthylhexane, le 1,6-diisocyanato-2,4,4-triméthylhexane, le 5-isocyanato-1-(2-isocyanatoéth-1-yl)-1,3,3-triméthylcyclohexane, le 5-isocyanato-1-(3-isocyanatoprop-1-yl)-1,3,3-triméthylcyclohexane, le 5-isocyanato-1-(4-isocyanatobut-1-yl)-1,3,3-triméthylcyclohexane, le 1-isocyanato-2-(3-isocyanatoprop-1-yl)-CyClohexane, le 1-isocyanato-2-(2-isocyanatoéth-1-yl)-cyclohexane, le dicyclohexylméthane-2,4'-diisocyanate, le 2-heptyl-3,4-bis(9-isocyanatononyl)-1-pentylcyclohexane, l'éthyléthylènediisocyanate, le 2,2,4-triméthylhexaméthylènediisocyanate ou un diisocyanate chloré, bromé, contenant du soufre ou du phosphore présentant une structure moléculaire asymétrique, de préférence l'isophoronediisocyanate.

3. Autoadhésif selon la revendication 1 ou 2, **caractérisé en ce que** des constituants de formulation, tels que les catalyseurs, les agents de protection contre le vieillissement (antioxydants), les agents de protection contre la lumière, les absorbants des UV, les additifs rhéologiques ainsi que d'autres adjuvants et additifs, y sont mélangés.

4. Procédé pour la préparation d'un autoadhésif selon au moins l'une quelconque des revendications précédentes, où
a) on dispose au préalable dans un récipient A essentiellement la combinaison de polypropylèneglycol mélangée au préalable (composant polyol) et dans un récipient B essentiellement le composant isocyanate, les autres constituants de formulation ayant le cas échéant déjà été ajoutés en mélangeant au préalable à ces composants dans un procédé de mélange usuel,
b) on transporte le composant polyol et le composant isocyanate via des pompes de précision au travers de la tête de mélange ou du tube de mélange d'une installation de mélange et de dosage de plusieurs composants, on les y mélange de manière homogène et on les y amène à réagir,
c) on applique les composants ainsi mélangés, qui réagissent chimiquement les uns avec les autres de manière directement consécutive sur un matériau support en forme de bande, qui se déplace de préférence à une vitesse constante,
d) le matériau support revêtu avec la masse de polyuréthane en réaction est guidé au travers d'un canal chauffant, dans lequel la masse de polyuréthane durcit en autoadhésif,
e) le matériau support revêtu est finalement enroulé dans un poste d'enroulement.

5. Procédé pour la préparation d'un autoadhésif selon au moins l'une quelconque des revendications précédentes, **caractérisé en ce que** la préparation est réalisée sans solvant.

6. Procédé pour la préparation d'un autoadhésif selon au moins l'une quelconque des revendications précédentes, **caractérisé en ce que** la préparation est réalisée sans addition d'eau.

7. Utilisation d'un autoadhésif selon au moins l'une quelconque des revendications précédentes pour la fabrication d'objets autoadhésifs.

8. Utilisation d'un autoadhésif selon au moins l'une quelconque des revendications précédentes pour la fixation de feuilles de bloc-notes, de feuilles de papier, de feuilles de calendrier, de bandes, de cartes ou de sachets en carton-pâte, en carton ou en matériau synthétique, de petits objets d'usage courant en matériau synthétique, en bois, en verre, en pierre ou en métal.
